**Europäisches Patentamt**

**European Patent Office**

**Office européen des brevets**

(19)

(11) Numéro de publication: **0 208 565 B1**

(12) **FASCICULE DE BREVET EUROPEEN**

(45) Date de publication du fascicule du brevet:
02.11.89

(51) Int. Cl.⁴: **H01H 1/42**

(21) Numéro de dépôt: **86401061.6**

(22) Date de dépôt: **20.05.86**

(54) Châssis à pinces d'embrochage encliquetables pour un disjoncteur multipolaire débrochable.

(30) Priorité: **05.06.85 FR 8508597**

(43) Date de publication de la demande:
**14.01.87 Bulletin 87/3**

(45) Mention de la délivrance du brevet:
**02.11.89 Bulletin 89/44**

(84) Etats contractants désignés:
**AT BE CH DE GB IT LI NL SE**

(56) Documents cités:
**BE-A- 567 124**
**FR-A- 1 431 889**
**US-A- 3 427 419**

(73) Titulaire: **MERLIN GERIN, Rue Henri Tarze,**
**F-38050 Grenoble Cédex(FR)**

(72) Inventeur: **Gerbert-Gaillard, Alain, Merlin Gerin,**
**F-38050 Grenoble Cedex(FR)**
Inventeur: **Nebon, Jean-Pierre, Merlin Gerin,**
**F-38050 Grenoble Cedex(FR)**

(74) Mandataire: **Kern, Paul et al, Merlin Gerin Sce.**
**Brevets 20, rue Henri Tarze, F-38050 Grenoble**
**Cédex(FR)**

## Description

L'invention est relative à un disjoncteur multipolaire débrochable susceptible d'être déplacé en translation entre deux positions de fin course d'embrochage et d'extraction, à l'intérieur d'un châssis conformé en un caisson parallélépipédique, comprenant une ouverture à la face avant autorisant l'extraction du disjoncteur et une paroi postérieure à l'opposé de l'ouverture de passage du disjoncteur, ladite paroi étant équipée d'un support isolant traversé par des plages fixes de raccordement, comportant chacune une première partie externe au caisson pour le raccordement électrique, notamment à un jeu de barres extérieur, et une deuxième partie interne au caisson sur laquelle est montée une pince d'embrochage solidaire du châssis, ladite pince coopérant en position enbrochée avec une plage de contact correspondante d'un pôle du disjoncteur.

Selon un disjoncteur débrochable connu, par exemple selon le document FR-A 1 431 889 chaque pince d'embrochage est fixée directement par des moyens d'assemblage à la paroi arrière du châssis d'une cellule à basse tension. Un disjoncteur triphasé nécessite le montage de six pinces d'embrochage sur le châssis. Le coût de fabrication de tels châssis est relativement élevé, et l'inspection des pinces lors d'une opération de maintenance est compliquée, car la paroi arrière du châssis doit être démontée partiellement.

On a également proposé de monter les pinces d'embrochage sur les plages de contact du disjoncteur au moyen d'un système d'encliquetage double assurant un agrippage bilatéral sur les deux côtés opposés de la plage de contact. Un tel dispositif est décrit dans le brevet US 3.427.419. Le montage et le démontage de ce type de pinces demeurent néanmoins difficiles.

L'objet de l'invention consiste à faciliter les opérations de montage et de démontage des pinces d'embrochage, et à utiliser un châssis standard destiné à être personnalisé en fin d'opération de montage par un choix judicieux des pinces d'embrochage et des plages de raccordement en fonction du calibre du disjoncteur, du type de raccordement des plages et de la tenue électrodynamique des pinces.

Le châssis selon l'invention est caractérisé en ce que l'extrémité de la deuxième partie interne de chaque plage fixe de raccordement comporte un rebord unique d'accrochage coopérant par encliquetage avec une encoche de forme conjuguée, ménagée dans la pince d'embrochage. Le démontage de la pince s'effectue par un basculement de cette dernière, provoquant le désencliquetage automatique dudit rebord et de l'encoche.

On remarque que l'encliquetage et le désencliquetage de la pince s'effectuent rapidement sans outillage, de manière à faciliter les opérations de montage et d'inspection.

Le rebord d'accrochage s'étend transversalement le long d'une grande face à l'extrémité de la plage de raccordement, la face parallèle opposée lisse étant conformée en surface de glissement pour les doigts de contact de la pince, tel que le point de basculement de la pince lors du démontage coïncide sensiblement avec la position du rebord d'accrochage.

La structure de la pince d'embrochage est avantageusement symétrique pour autoriser un montage rapide sur la plage de raccordement, quelle que soit l'orientation de la pince.

D'autres avantages et caractéristiques ressortiront plus clairement de la description qui va suivre d'un mode de réalisation de l'invention, donné à titre d'exemple non limitatif et représenté aux dessins annexés, dans lesquels :

- la figure 1 est une vue en perspective partiellement arrachée, montrant la paroi arrière d'un châssis selon l'invention ;
- la figure 2 montre une vue à échelle agrandie de la pince d'embrochage encliquetée sur la plage fixe de raccordement, la plage de contact du disjoncteur étant représentée en position embrochée (en traits pointillés), et en position débrochée (en traits forts) ;
- la figure 3 est une vue en élévation de la plage fixe de raccordement selon la figure 2 ;
- la figure 4 est une vue en plan de la figure 3 ;
- la figure 5 représente une vue en élévation à échelle agrandie d'un doigt de contact de la pince selon la figure 2.

Sur les figures, un châssis fixe est conformé en caisson 12 parallélépipédique, servant de support à un disjoncteur 14 multipolaire du type débrochable, notamment à boîtier 16 isolant moulé. Chaque pôle du disjoncteur 14 comporte une paire de plages 18 de contact, faisant saillie de la face arrière du boîtier 16 et coopérant en position embrochée du disjoncteur avec une paire de pinces d'embrochage 20 superposées, solidaires du châssis 10. Le disjoncteur 14 à basse tension et de calibre élevé, est déplaçable en translation bidirectionnelle (flèche F) entre deux positions de fin de course d'embrochage et d'extraction, grâce à l'actionnement d'un mécanisme auxiliaire de commande (non représenté), disposé au voisinage de la face avant du caisson 12.

Chaque pince d'embrochage 20 comporte une pluralité de paires de doigts de contact élémentaires 22, 24, opposés coopérant avec des ressorts 26 de compression, disposés de chaque côté des doigts, l'ensemble étant agencé à l'intérieur d'une cage 28 de connexion. Chaque doigt de contact 22, 24 élémentaire est conformé en pont en matériau conducteur, notamment en cuivre, s'étendant selon la direction longitudinale d'embrochage (flèche F) et comprenant deux contacts d'extrémités (22 a, 22 b ; 24 a, 24 b) et une face 30 centrale externe disposée entre les contacts d'extrémités pour servir d'appui au ressort 26 correspondant.

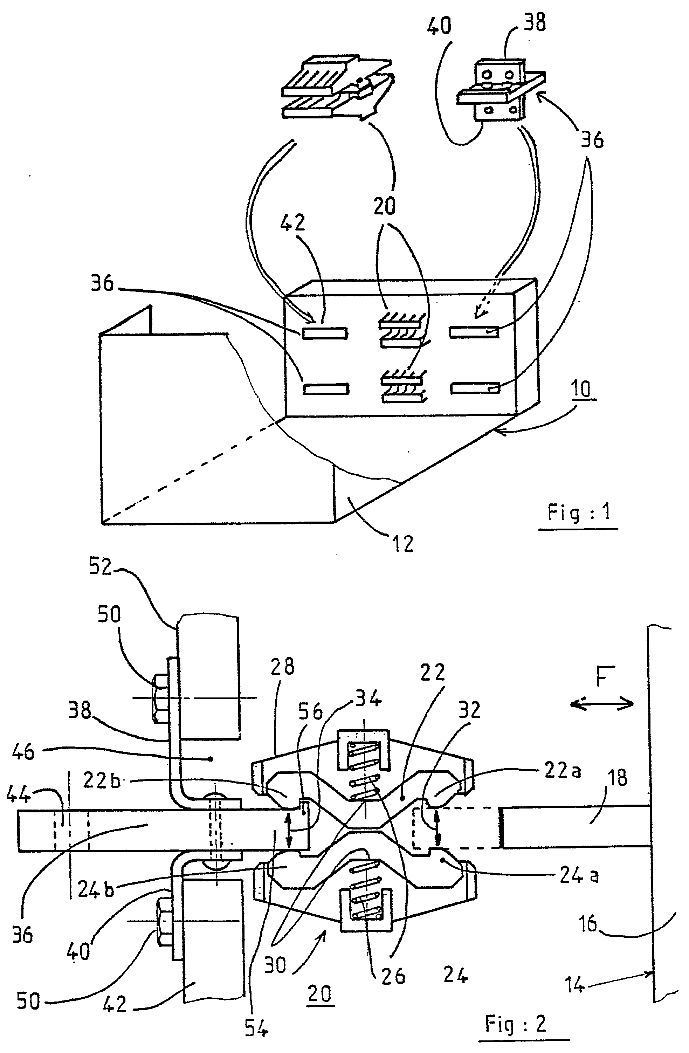

Les doigts de contact 22, 24 opposés de chaque paire sont sollicités élastiquement l'un vers l'autre par l'action de compression des ressorts 26 dans la zone médiane, en ménageant à chaque bout de la pince 20, un intervalle 32, 34 (figure 2) entre les protubérances des contacts d'extrémités 22 a, 24 a ; 22 b, 24 b. L'intervalle 34 autorise la fixation par encliquetage de la pince 20 sur une plage de raccordement 36 fixée à demeure par des étriers 38, 40 à un support 42 isolant de la paroi arrière du caisson 12. L'intervalle 32 opposé est destiné à l'embrochage de la plage de contact 18 correspondante du disjoncteur 14, lors de l'insertion de ce dernier dans le caisson 12.

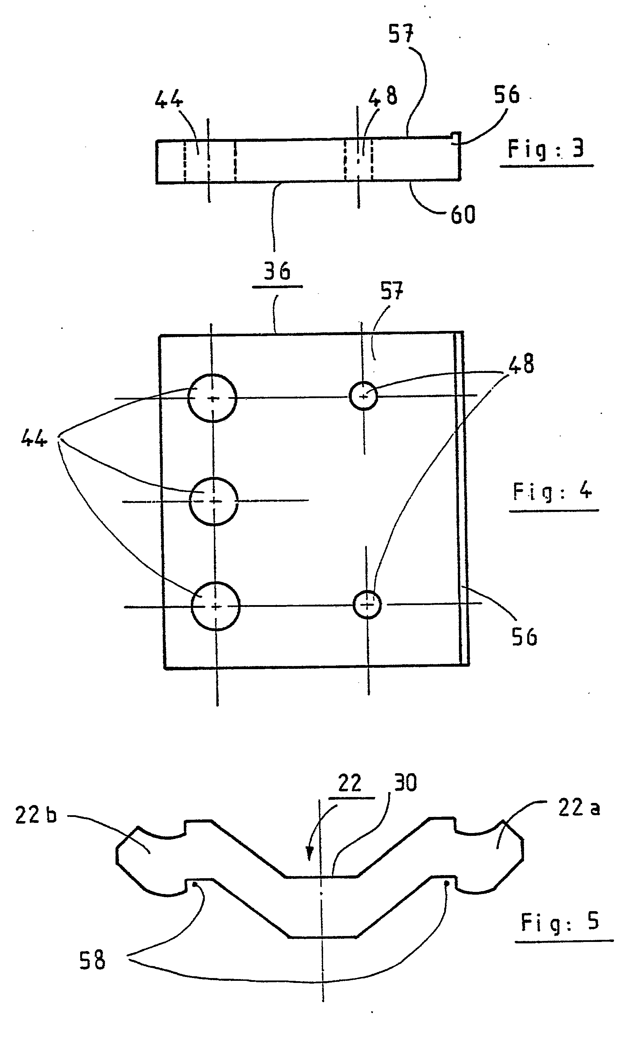

Chaque plage de raccordement 36 (figures 3 et 4) de forme rectangulaire est dotée d'orifices 44 permettant le branchement à un jeu de barres extérieur (non représenté) s'étendant à l'arrière du caisson 12. La plage de raccordement 36 traverse longitudinalement une lumière 46 (figure 2) prévue dans le support 42 isolant, et comporte d'autre part dans la zone médiane, des trous 48 pour la fixation des étriers 38, 40, en forme d'équerres. En position montée de la plage de raccordement 36, les trous 48 sont situés sensiblement dans le plan vertical du support 42, et la fixation des étriers 38, 40, s'effectue par des vis 50 sur la face extérieure 52 du support 42, à l'opposé de la pince 20. L'extrémité 54 de droite (sur la figure 2) de la plage de raccordement 36 se trouve à l'intérieur du caisson 12, et est pourvue d'un rebord 56 d'accrochage s'étendant transversalement le long de la grande face horizontale supérieure 57 de la plage 36 (voir figures 3 et 4). Le rebord d'accrochage 56 est unique et coopère, lors de l'encliquetage de la pince 20 avec une encoche 58 ou saignée de forme conjuguée, agencée dans chaque doigt de contact supérieur 22 au voisinage du contact d'extrémité 22 b. La face horizontale inférieure 60 de la plage 36 est lisse et sert de surface de glissement aux doigt de contacts inférieurs 24.

Sur la figure 5, chaque doigt de contact 22 élémentaire de la pince 20, présente un profil symétrique par rapport au plan médian vertical perpendiculaire à la face 30 d'appui du ressort 26. Le doigt de contact 22 est muni de deux encoches 58 symétriques, autorisant un encliquetage de la pince 20 sur la plage 36 par l'un quelconque des intervalles 32 ou 34 opposés.

Les doigts de contact 24 inférieurs de la pince 20 peuvent être dépourvus d'encoches 58 de verrouillage, tels que représentés sur la figure 2, ou au contraire présenter une structure identique à celle de la figure 5. Dans ce dernier cas, la pince 20 présente une symétrie totale, à la fois par rapport au plan médian vertical, et au plan médian horizontal.

La mise en place de la pince d'embrochage 20 sur la plage 36 de raccordement s'opère par encliquetage du rebord 56 dans l'encoche 58 de verrouillage des doigts de contact 22. La pince 20 reste en position encliquetée sur la plage 36 de raccordement, lors du mouvement de débrochage du disjoncteur 14, au cours duquel la plage de contact 18 correspondante quitte l'intervalle 32 d'embrochage par entraînement en translation vers la droite, la position débrochée étant représentée en traits pleins sur la figure 2. Le rebord 56 d'accrochage constitue une butée unidirectionnelle dans le sens de débrochage, de manière à retenir positivement la pince 20 sur la plage de raccordement 36, malgré l'effet de pincement exercé par les doigts de contacts 22, 24 sur les faces opposées de la plage de contact 18 débrochable.

Le démontage de la pince 20 d'embrochage s'effectue rapidement sans outillage, par un léger basculement de la cage 28, provoquant le désencliquetage du rebord d'accrochage 56 et de l'encoche 58 correspondante. Le point de basculement de la pince 20 coïncide sensiblement avec la position du rebord 56. La pince 20 est alors désolidarisée de la plage de raccordement 36 et peut être retirée facilement lors d'une inspection de l'état du disjoncteur.

On remarque la possibilité d'utiliser un châssis 10 standard, lequel peut être personnalisé en fin d'opération de montage par un choix judicieux des pinces d'embrochage 20 et des plages de raccordement 36, en fonction du calibre du disjoncteur 14, du type de raccordement et de la tenue électrodynamique (voir figure 1).

Le rebord d'accrochage 56 pourrait bien entendu être agencé à l'extrémité de la face inférieure 60 de la plage de raccordement 36, la face supérieure 57 étant alors lisse.

## Revendications

1. Disjoncteur multipolaire débrochable, susceptible d'être déplacé en translation entre deux positions de fin course d'embrochage et d'extraction à l'intérieur d'un châssis conformé en caisson parallélépipédique, comprenant une ouverture à la face avant, autorisant l'extraction du disjoncteur et une paroi postérieure à l'opposé de l'ouverture de passage du disjoncteur, ladite paroi étant équipée d'un support isolant traversé par des plages fixes de raccordement, comportant chacune une première partie externe au caisson pour le raccordement électrique, notamment à un jeu de barres extérieur, et une deuxième partie interne au caisson sur laquelle est montée une pince d'embrochage solidaire du châssis, ladite pince coopérant en position embrochée avec une plage de contact correspondante d'un pôle du disjoncteur, caractérisé en ce que l'extrémité (54) de la deuxième partie interne de chaque plage fixe (36) de raccordement comporte un rebord (56) unique d'accrochage coopérant par encliquetage avec une encoche (58) de forme conjuguée, ménagée dans la pince d'embrochage (20), pour que le démontage de la pince (20) s'effectue par un basculement de cette dernière, provoquant le désencliquetage automatique dudit rebord (56) et de l'encoche (58).

2. Disjoncteur multipolaire débrochable selon la revendication 1, ladite plage de raccordement ayant une forme rectangulaire, caractérisé en ce que le rebord (56) d'accrochage s'étend transversalement le long d'une grande face (57) à l'extrémité (54) de la plage de raccordement (36), la face parallèle opposée (60) lisse étant conformée en surface de glissement pour les doigts de contact (24) de la pince (20), tel que le point de basculement de la pince (20) lors du démontage coïncide sensiblement avec la position du rebord (56) d'accrochage.

3. Disjoncteur multipolaire débrochable selon la revendication 2, caractérisé en ce que la zone médiane de chaque plage de raccordement (36) est percée de trous (48) autorisant le montage d'étrier (38, 40) de fixation au support (42) isolant du châssis (10).

4. Disjoncteur multipolaire débrochable selon la revendication 1, 2 ou 3, ladite pince d'embrochage comportant une pluralité de paires de doigts de contact élémentaires opposés coopérant avec des ressorts, chaque doigt de contact comprenant un pont en matériau conducteur, notamment en cuivre, et à double contacts d'extrémités, caractérisé en ce que l'encoche (58) de verrouillage est située au voisinage de chaque contact d'extrémité (22 a, 22 b ; 24 a, 24 b) du pont, tel que chaque doigt de contact (22, 24), présente une structure symétrique par rapport au plan médian vertical.

## Patentansprüche

1. Mehrpoliger trennbarer Schalter, der zwischen zwei Stellungen, Ende des Einschiebweges und des Ausfuhrweges, geradlinig im Innern eines Gestells, das als quaderförmiger Kasten ausgebildet ist, bewegt werden kann, mit einer Öffnung auf der Vorderseite für das Herausziehen des Schalters und einer Hinterwand gegenüber der Durchgangsöffnung des Schalters, wobei die genannte Wand mit einer Isolierstütze ausgerüstet ist, die von feststehenden Anschlussfahnen durchquert wird, welche jede ein erstes Teil ausserhalb des Kastens aufweist für den elektrischen Anschluss, insbesondere an ein äusseres Sammelschienensystem, und ein zweites Teil innerhalb des Kastens, auf dem eine mit dem Gestell verbundene Steckverbindungsklammer montiert ist, welche in eingeschobener Lage mit einer entprechenden Anschlussfahne eines Schalterpols zusammenarbeitet, dadurch gekennzeichnet, dass das Ende (54) des zweiten inneren Teils jeder feststehenden Anschlussfahne (36) einen einzigen Aufhängerand (56) aufweist, der durch Einschnappen mit einem Einschnitt (58) von entsprechender Form zusammenarbeitet, der in der Steckverbindungsklammer (20) vorgesehen ist, um die Demontage der Klammer (20) durch ein Schwenken der Klammer durchzuführen, was das automatische Ausschnappen des genannten Randes (56) und des Einschnittes (58) bewirkt.

2. Mehrpoliger trennbarer Schalter gemäss Anspruch 1, wobei die genannte Anschlussfahne eine rechteckige Form hat, dadurch gekennzeichnet, dass sich der Aufhängerand (56) quer entlang einer grossen Fläche (57) des Endes (54) der Anschlussfahne (36) erstreckt, wobei die glatte parallele entgegengesetzte Fläche (60) als Gleitoberfläche ausgebildet ist für die Kontaktfinger (24) der Klammer (20), so dass der Schwenkpunkt der Klammer (20) bei der Demontage ziemlich mit der Stellung des Aufhängerandes (56) übereinstimmt.

3. Mehrpoliger trennbarer Schalter gemäss Anspruch 2, dadurch gekennzeichnet, dass die Mittelzone jeder Anschlussfahne (36) von Löchern (48) durchbohrt ist, welche die Montage von Befestigungsbügeln (38, 40) an der Isolierstütze (42) des Gestells (10) ermöglichen.

4. Mehrpoliger trennbarer Schalter gemäss Anspruch 1, 2, oder 3, wobei die genannte Steckverbindungsklammer eine Mehrzahl von elementaren, gegenüberliegenden Kontaktfingerpaaren aufweist, die mit Federn zusammenarbeiten, und wobei jeder Kontaktfinger eine Brücke aus leitfähigem Material, insbesondere aus Kupfer, und mit zwei Endkontakten aufweist, dadurch gekennzeichnet, dass der Verriegelungseinschnitt (58) in der Nähe jedes Endkontaktes (22a, 22b; 24a, 24b) der Brücke angeordnet ist, so dass jede Kontaktfinger (22, 24) eine symmetrische Struktur gegenüber der mittleren senkrechten Ebene aufweist.

## Claims

1. A withdrawable multipole circuit breaker, able to be moved in translation between two end of draw-in and extraction travel positions inside a frame shaped as a parallelipipedic housing, comprising an opening in the front panel enabling the circuit breaker to be extracted and a rear wall opposite the circuit breaker passage opening, said wall being equipped with an insulating support through which foxed connection terminals pass, each comprising a first part external to the housing for electrical connection, notably to an external busbar, and a second part internal to the housing on which is mounted a draw-in grip securedly fixed to the frame, said grip cooperating in the draw-in position with a corresponding contact terminal of a pole of the circuit breaker, characterized by the fact that the end (54) of the second internal part of each fixed connection terminal (36) comprises a single latching edge (56) cooperating with a notch (58) of conjugated shape, arranged in the draw-in grip (20), onto which it clips, in order to remove the grip (20) by tilting the latter, causing said edge (56) to be automatically unclipped from the notch (58).

2. The withdrawable multipole circuit breaker according to claim 1, said connection terminal having a rectangular shape, characterized by the fact that the latching edge (56) extends transversely along a large face (57) at the end (54) of the connection terminal (36) the smooth opposite parallel face (60) being shaped as a sliding surface for the contact fingers (24) of the grip (20), in such a way that the tilting point of the grip (20) when disassembly takes place coincides appreciably with the position of the latching edge (56).

3. The withdrawable multipole circuit breaker according to claim 2, characterized by the fact that the middle area of each connection terminal (36) is drilled with holes (48) enabling brackets (38, 40) to be mounted for fixing to the insulating support (42) of the frame (10).

4. The withdrawable multipole circuit breaker according to claims 1, 2 or 3, said draw-in grip comprising a plurality of pairs of opposing elementary contact fingers operating in conjunction with springs, each contact finger comprising a bridge made of conducting material, notably copper, with two end contacts, characterized by the fact that the latching notch (58) is located in proximity to each end contact (22a, 22b; 24a, 24b) of the bridge, in such a way that each contact finger (22, 24) presents a symmetrical structure in relation to the vertical midplane.

EP 0 208 565 B1

Fig : 1

Fig : 2

57

44          48          56

_Fig : 3_

60

36          57

48

44

_Fig : 4_

56

22   30

22 b          22 a

58          _Fig : 5_